# EUROPEAN PATENT APPLICATION

(11) **EP 2 592 727 A2**
(43) Date of publication of application: **15.05.2013**
(21) Application number: 12187586.8
(22) Date of filing: 08.10.2012
(51) Int. Cl.: H02K 9/19, H02K 5/20

(54) **Rotating electrical machine**

(30) Priority: 10.11.2011 JP 2011246360
(71) Applicant: Kabushiki Kaisha Yaskawa Denki, Kitakyushu-shi, Fukuoka 806-0004 (JP)
(72) Inventor: Nagao, Toshio, Kitakyushu-shi, Fukuoka 806-0004 (JP); Nagao, Mitsutoshi, Kitakyushu-shi, Fukuoka 806-0004 (JP)
(74) Representative: Viering, Jentschura & Partner

(57) **Abstract**

A rotating electrical machine (10) includes a cylindrical stator (21) and a frame (11) including a first portion (11a) and a second portion (11h), the first portion (11a) being formed by reducing the diameter of the frame (11) at a part of an outer peripheral surface such that the thickness of the frame at the part is reduced, the second portion (11h) having a larger thickness than the first portion (11a), the stator (21) being provided to an inner peripheral surface of the frame (11). The frame (11) includes a containing portion (11b), a first coolant path (11c), and a second coolant path (11d). The containing portion (11b) contains a thermal component (23), the first coolant path (11c) is formed between the containing portion (11b) and the stator (21), and the second coolant path (11d) is formed in the second portion (11h).

## Description

### BACKGROUND OF THE INVENTION

### 1. Field of the Invention

The present invention relates to a rotating electrical machine.

### 2. Description of the Related Art

A rotating electrical machine including a water-cooled cooling mechanism has heretofore been known. For example, Japanese Unexamined Patent Application Publication No. 6-99745 discloses a drive for an electric vehicle including an electric motor (i.e., a rotating electrical machine) that includes an annular coolant channel surrounding the exterior of a stator.

In the rotating electrical machine according to Japanese Unexamined Patent Application Publication No. 6-99745, a power module (referred to as a "thermal component" below), which is heated at the time of driving, is disposed above the stator, and the thermal component is cooled together with the stator by a coolant passing through the coolant channel.

The existing rotating electrical machine, however, has room for further improvement in terms of size reduction of the machine. This is because a casing of the rotating electrical machine requires a predetermined width exceeding the outer diameter of the stator in order to form the coolant channel surrounding the exterior of the stator.

### SUMMARY OF THE INVENTION

An aspect of an embodiment has been made in view of the above-described circumstances and an object of the embodiment is to provide a rotating electrical machine that is capable of having a reduced size.

A rotating electrical machine according to an aspect of the embodiment includes a cylindrical stator and a frame including a first portion and a second portion, the first portion being formed by reducing the diameter of the frame at a part of an outer peripheral surface such that the thickness of the frame at the part is reduced, the second portion having a larger thickness than the first portion, the stator being provided to an inner peripheral surface of the frame. The frame includes a containing portion, a first coolant path, and a second coolant path. The containing portion contains a thermal component, the first coolant path is formed between the containing portion and the stator, and the second coolant path is formed in the second portion.

According to the aspect of the embodiment, a rotating electrical machine is capable of having a reduced size.

### BRIEF DESCRIPTION OF THE DRAWINGS

Fig. 1 illustrates an example of a configuration of a rotating electrical machine according to an embodiment.

Fig. 2 is a cross-sectional view of the rotating electrical machine taken along the line II-II of Fig. 1.

Fig. 3 is a cross-sectional view of the rotating electrical machine taken along the line III-III of Fig. 2.

Fig. 4A is a cross-sectional view of the rotating electrical machine taken along the line IVA-IVA of Fig. 3.

Fig. 4B is a cross-sectional view of the rotating electrical machine taken along the line IVB-IVB of Fig. 3.

Fig. 5A is a cross-sectional view of the rotating electrical machine taken along the line VA-VA of Fig. 4B.

Fig. 5B is a cross-sectional view of the rotating electrical machine taken along the line VBC-VBC of Fig. 5A.

Fig. 5C is a cross-sectional view of the rotating electrical machine taken along the line VBC-VBC of Fig. 5A.

Fig. 6 is a schematic diagram illustrating a flow of a coolant.

### DESCRIPTION OF THE PREFERRED EMBODIMENTS

Referring to the drawings, an embodiment of a rotating electrical machine disclosed in the subject application will be described in detail below. Note that the present disclosure is not limited to the embodiment described below. Description will be given below by taking the rotating electrical machine as a vehicle generator.

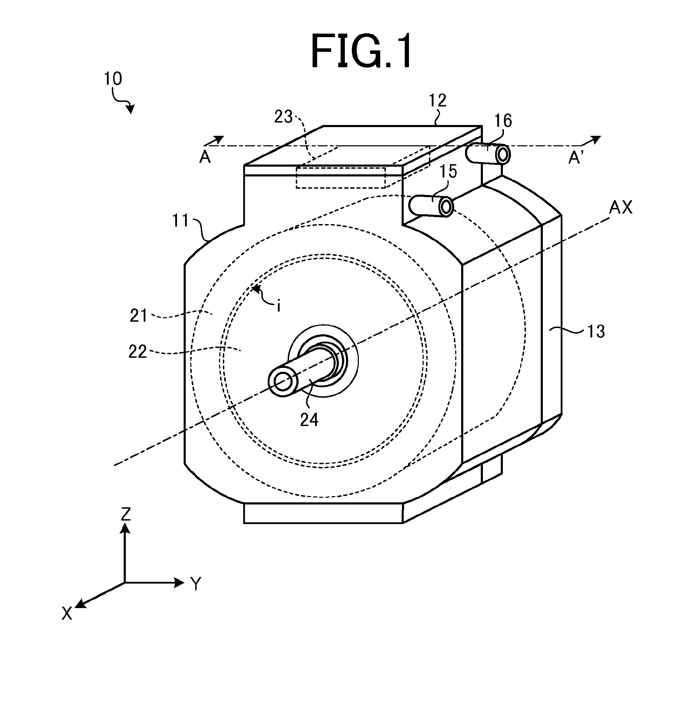

Referring to Fig. 1, an example of a configuration of a rotating electrical machine according to the embodiment will be described first. Fig. 1 illustrates an example of a configuration of a rotating electrical machine 10 according to the embodiment. Fig. 1 illustrates the rotating electrical machine 10 whose load side is viewed obliquely from above.

For easy explanation, Fig. 1 also illustrates a three-dimensional orthogonal coordinate system that includes a Z axis whose positive direction is defined as a vertical upward direction. Such an orthogonal coordinate system may be illustrated in other drawings used for the following description.

In the following description, only one of multiple components may be denoted by a symbol, and the others may not be denoted by the symbol. In such a case, the component denoted by a symbol and the others are regarded as being similarly configured.

As illustrated in Fig. 1, the rotating electrical machine 10 includes a frame 11, a first cover 12, and a bracket 13. The frame 11 has an almost cylindrical shape with its end closed, and contains a drive of the rotating electrical machine 10 including a stator 21 and a rotator 22, and a thermal component 23 therein.

The stator 21 is cylindrically formed by stacking multiple annular electromagnetic steel plates, and the outer peripheral surface of the stator 21 is fixed to the inner peripheral surface of the frame 11. In other words, the inner peripheral surface of the frame 11 contacts the stator 21 from the exterior.

The rotator 22 is disposed on the inner peripheral side of the stator 21 with a predetermined gap i interposed therebetween so as to be opposite the stator 21. The rotator 22 includes a shaft 24 that penetrates in the X direction illustrated in the drawings. The shaft 24 is pivotally supported by bearings (to be described below) disposed on the load side and an opposite-to-load side. The rotator 22 is thus rotatable around the axis AX illustrated in the drawings.

The thermal component 23 is disposed above the stator 21. Here, the thermal component 23 is contained in a first containing portion 11b (to be described below) of the frame 11. The first containing portion 11b has an opening on an upper portion, and the first cover 12 is placed over the opening.

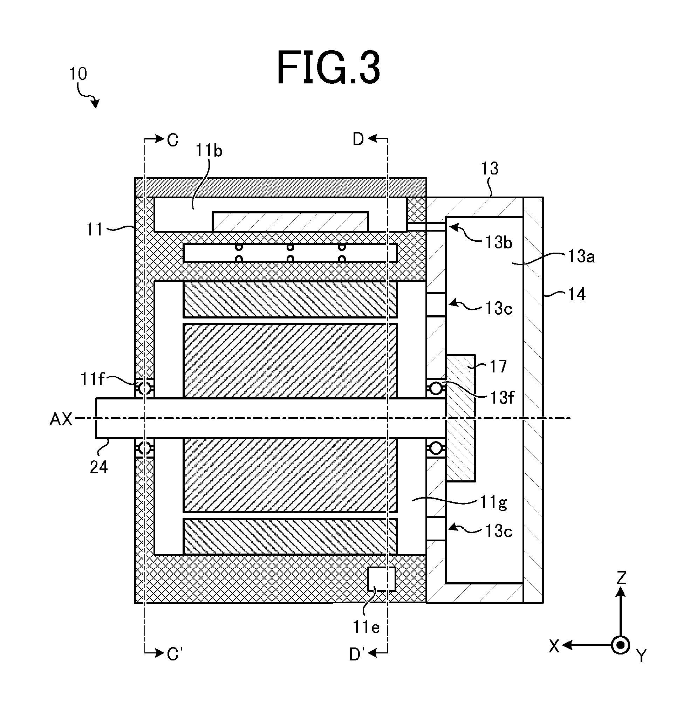

Although not illustrated here, the frame 11 also has an opening on the opposite-to-load side, and the bracket 13 is placed over the opening. The configuration of the frame 11 on the opposite-to-load side will be further described below referring to Fig. 3.

The frame 11 also has a coolant inlet 15 and a coolant outlet 16. For example, the outlet 16 is positioned at a higher level than the inlet 15, here.

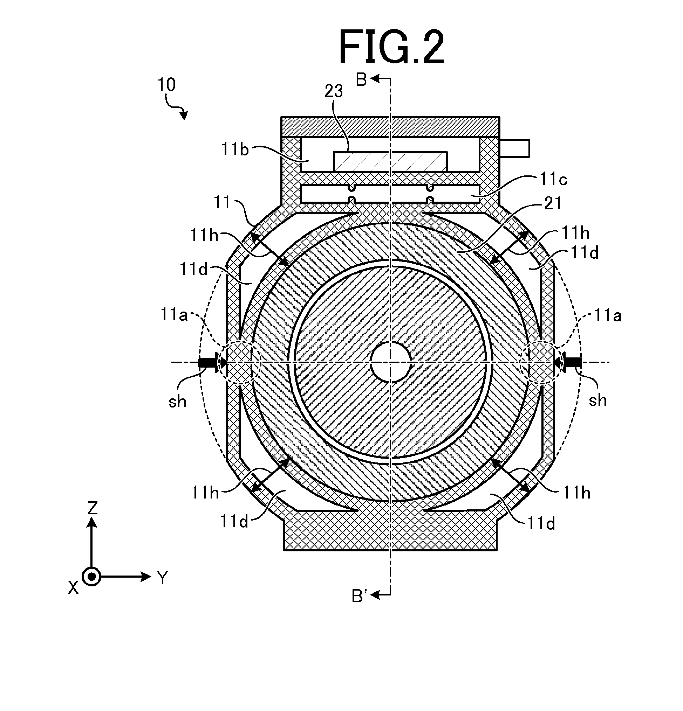

Referring now to a cross-sectional view taken along a YZ plane including the line A-A' of Fig. 1, the example of the configuration of the rotating electrical machine 10 will be further described in detail. Fig. 2 is a cross-sectional view of the rotating electrical machine 10 taken along the line II-II of Fig. 1.

As illustrated in Fig. 2, the frame 11 includes first portions 11a located in side walls, the first portions 11a each being formed by reducing the diameter of the frame 11c at a part of the outer peripheral surface such that the thickness of the frame at the part is reduced (see the arrows sh in the drawing). Since the frame 11 thus has the thinned first portions 11a, the required width of the rotating electrical machine 10 can be reduced while the outer diameter of the stator 21 is maintained. In other words, securing outputs of the rotating electrical machine 10 and reducing the size of the rotating electrical machine 10 can be simultaneously achieved.

As illustrated in Fig. 2, in this embodiment, the frame 11 includes a first portion 11a on each side of the stator 21.

The frame 11 also includes a first containing portion 11b, a first coolant path 11c, and second coolant paths 11d. As described above, the first containing portion 11b contains the thermal component 23.

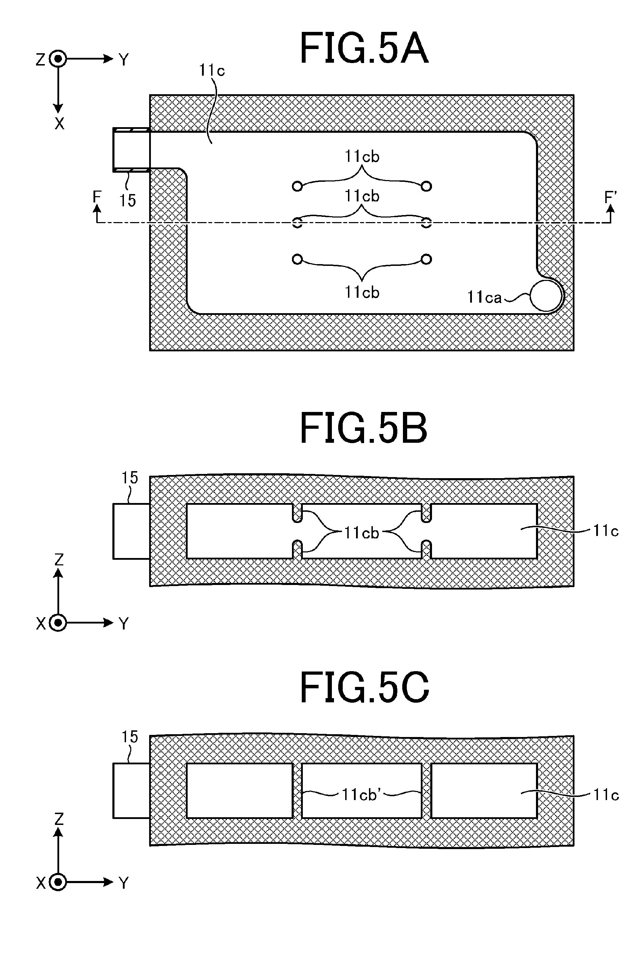

The first coolant path 11c is formed between the first containing portion 11b and the stator 21 and includes a ceiling portion that is almost in parallel with a bottom face of the first containing portion 11b. Since the first coolant path 11c includes the above-described ceiling portion, the thermal component 23 can be efficiently cooled down from underside. The first coolant path 11c will be described below in detail referring to Figs. 5A to 5C.

The second coolant paths 11d are formed separately from one another at individual second portions 11h that are thicker than the first portions 11a. As illustrated in Fig. 2, in this embodiment, the second coolant paths 11d are individually formed in the second portions 11h located above and below the first portions 11a.

Each second coolant path 11d has an inner wall face having a shape that corresponds to the outer periphery of the stator 21, and is formed so as to extend in a direction of a center axis of an inner periphery of the frame 11 (i.e., the axis AX illustrated in Fig. 1). By forming the second coolant paths 11d in such a shape, the stator 21 can be efficiently cooled down.

Referring now to Fig. 3, which is a cross-sectional view 1 of the rotating electrical machine 10 taken along the line III-III of Fig. 2, an internal structure of the rotating electrical machine 10 when viewed from a side (from a positive side of the Y axis) will be described.

As illustrated in Fig. 3, the frame 11 further includes connection paths 11e that connect the second coolant paths 11d to one another (see Fig. 2). The connection paths 11e are formed near end faces of the frame 11 in the axis AX direction. The connection paths 11e each have an inner wall face having a shape that corresponds to the outer periphery of the stator 21 as in those of the second coolant paths 11d.

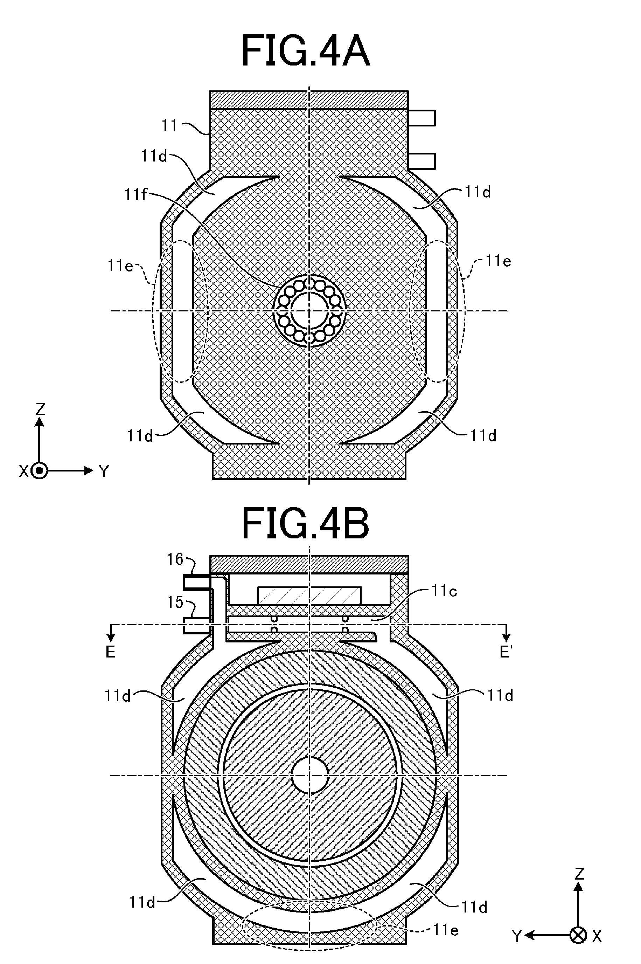

Fig. 3 only illustrates a connection path 11e formed near an opposite-to-load-side end face of the frame 11 in the axis AX direction, but other connection paths 11e are also formed near a load-side end face of the frame 11. These connection paths 11e will be described referring to Fig. 4A. The load-side end face of the frame 11 in the axis AX direction holds an annular bearing 11f.

Although this is a repetition of what has already been described referring to Fig. 1, the bracket 13 is placed over the opposite-to-load-side opening of the frame 11 as illustrated in Fig. 3. The bracket 13 holds an annular bearing 13f, and the shaft 24 is pivotally supported by the bearing 13f and the bearing 11f.

A second cover 14 is placed over an opening of the bracket 13. A second containing portion 13a is thereby defined. The second containing portion 13a contains a resolver 17 that is mounted on the shaft 24 at an opposite-to-load-side end portion of the shaft 24.

The bracket 13 also has a first communicating hole 13b, which connects the second containing portion 13a to the first containing portion 11b, and second communicating holes 13c, which connect the second containing portion 13a to a third containing portion 11g that contains the drive of the rotating electrical machine 10.

By using the first communicating hole 13b and the second communicating holes 13c, the second containing portion 13a can contain, beside the resolver 17, a connection for a wiring extending from the third containing portion 11g, and the wiring can be easily extended further to the first containing portion 11b.

In other words, components that require maintenance can be densely disposed along the YZ plane in the drawing, which is favorable because a maintenance efficiency is increased. In the case where the rotating electrical machine 10 is used as a vehicle generator, in particular, a portion at which a sticker is applied for secure waterproofing is formed so as to be flat along the YZ plane and favorably, the highly reliable sticker can be easily applied thereto.

Next, the connection paths 11e will be further described in detail referring to Fig. 4A, which is a cross-sectional view taken along the line IVA-IVA of Fig. 3, and Fig. 4B, which is a cross-sectional view taken along the line IVB-IVB of Fig. 3.

As illustrated in Fig. 4A, connection paths 11e that connect the second coolant paths 11d to one another in the Z axis in the drawings are also disposed near a load-side end face of the frame 11.

Here, Fig. 4A illustrates the connection paths 11e that connect the second coolant paths 11d to one another along the outer edge of the frame 11, but the embodiment is not limited to this. For example, the width of each connection path 11e illustrated in Fig. 4A may be further increased to such a degree that the connection path 11e is extended to a portion near the outer periphery of the bearing 11f to improve an efficiency with which end faces of the stator 21 and the rotator 22 (see Fig. 1) are cooled.

Although this is a repetition of what has already been described referring to Fig. 3, a connection path 11e that connects the second coolant paths 11d formed below the first portions 11a (see Fig. 2) in the Y axis direction in the drawing is disposed near the opposite-to-load-side end face of the frame 11, as illustrated in Fig. 4B.

As illustrated in Fig. 4B, one of the second coolant paths 11d formed above the first portions 11a (see Fig. 2) is formed so as to be continuous with the first coolant path 11c. The other second coolant path 11d is formed so as to be continuous with the coolant outlet 16.

The first coolant path 11c is formed so as to be continuous with the coolant inlet 15. With this configuration, the first coolant path 11c and the second coolant paths 11d are connected so as to be continuous with one another in a predetermined order from the inlet 15 to the outlet 16.

Referring now to Fig. 5A, which is a cross-sectional view of the rotating electrical machine 10 taken along the line VA-VA of Fig. 4B, the first coolant path 11c will be described in detail.

As illustrated in Fig. 5A, the first coolant path 11c is formed in a substantially rectangular shape having a predetermined width that is approximately the same as that of the first containing portion 11b (see Fig. 2). The first coolant path 11c is continuous with the inlet 15 at one of the corner portions of the substantially rectangular shape. The first coolant path 11c also includes a third communicating hole 11ca, which is continuous with one of the second coolant paths 11d, near a corner portion that is located diagonal to the corner portion for the inlet 15.

The first coolant path 11c also includes multiple protrusions 11cb. The protrusions 11cb function as fins that steer the coolant injected from the inlet 15 and flowing to the third communicating hole 11ca via the first coolant path 11c.

Although Fig. 5A illustrates six protrusions 11cb that are arranged in parallel to one another, the arrangement or the number of protrusions is not limited to this example. For example, the protrusions 11cb may be arranged such that the coolant flows so as to meander.

The protrusions 11cb will be further described referring to Figs. 5B and 5C. Figs. 5B and 5C are cross-sectional views of the rotating electrical machine 10 taken along the line VBC-VBC of Fig. 5A.

As illustrated in Fig. 5B, protrusions 11cb on the ceiling portion of the first coolant path 11c and protrusions 11cb on a bottom face portion of the first coolant path 11c are disposed so as to protrude toward each other. As illustrated in Fig. 5B, by keeping tip ends of the protrusions 11cb on the ceiling portion and tip ends of the protrusions 11cb on the bottom face portion from contacting each other, heat conduction from the bottom face portion of the first coolant path 11c can be interrupted while the coolant is kept being steered. That is, the thermal component 23 (see Fig. 2) disposed above the first coolant path 11c can be reliably cooled down.

The above discussion is not meant to exclude forming of struts 11cb' as illustrated in Fig. 5C in place of the protrusions 11cb, the struts 11cb' connecting the ceiling portion and the bottom face portion of the first coolant path 11c to each other. If the struts 11cb' are formed, advantages including an increase in strength of the first coolant path 11c can be obtained.

Since the first coolant path 11c is disposed so as to be continuous with the inlet 15 as described above, a coolant that has just been injected and thus has a low temperature can be used to cool the thermal component 23.
In short, the thermal component 23 can be efficiently cooled down.

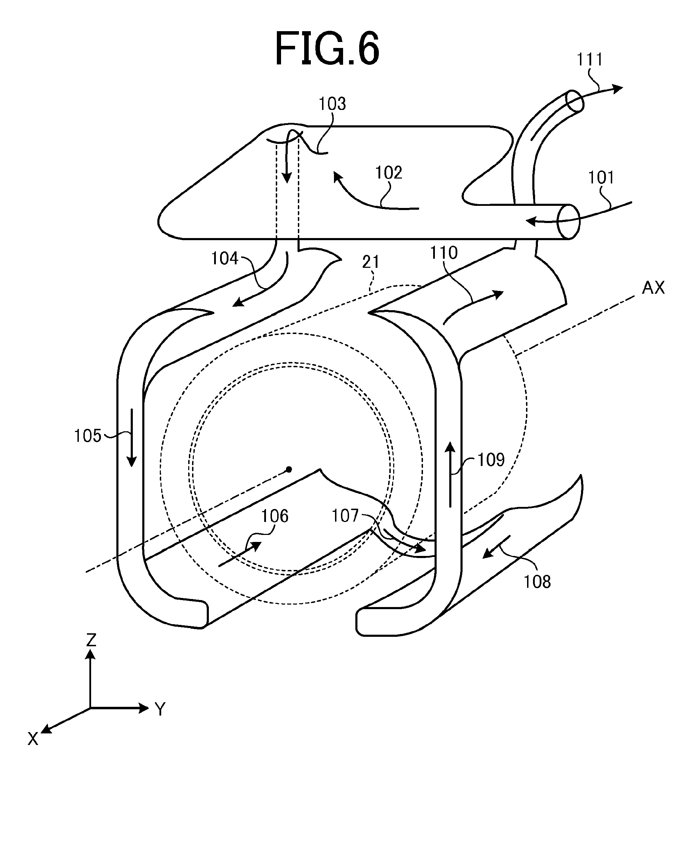

On the basis of the above configuration, a flow of a coolant according to this embodiment will be described referring to Fig. 6. Fig. 6 is a schematic diagram illustrating a flow of a coolant.

As illustrated in Fig. 6, a coolant injected from the inlet 15 (see the arrow 101) flows to the first coolant path 11c (see the arrow 102), and then to the third communicating hole 11ca (see the arrow 103).

The coolant then flows to one of the second coolant paths 11d that extends in the axis AX direction along the outer periphery of the stator 21 (see the arrow 104), passes through one of the connection paths 11e near the load-side end face of the frame 11 (see the arrow 105), and turns toward the opposite-to-load side along another one of the second coolant paths 11d (see the arrow 106).

Subsequently, the coolant passes through another one of the connection paths 11e near the opposite-to-load-side end face of the frame 11 (see the arrow 107), and turns again toward the load side along another one of the second coolant paths 11d (see the arrow 108).

Thereafter, the coolant passes through another one of the connection paths 11e near the load-side end face of the frame 11 (see the arrow 109), and turns again toward the opposite-to-load side along another one of the second coolant paths 11d (see the arrow 110). The coolant is finally ejected from the outlet 16 (see the arrow 111).

By causing the coolant to firstly flow into the first coolant path 11c, the thermal component 23 can be cooled down efficiently and reliably. While the independent second coolant paths 11d are provided, which are separated by the first portions 11a (see Fig. 2), the coolant is caused to flow over the entire outer periphery of the stator 21 via the connection paths 11e. Thus, reducing the size of the casing and maintaining a high cooling efficiency can be simultaneously achieved.

The rotating electrical machine 10 according to the embodiment also has an effect that distortion of the frame 11 is less likely to impinge on the thermal component 23 and other components. This effect will be described more specifically referring to Fig. 2 that has already been used above.

As illustrated in Fig. 2, the stator 21 is fixed to the inner peripheral surface of the frame 11 by shrink fitting or other methods. At this time, the inner peripheral surface of the frame 11 and the periphery thereof may be distorted by the heating during the shrink fitting.

However, since the rotating electrical machine 10 according to the embodiment includes the first coolant path 11c having a hollow structure between the stator 21 and the first containing portion 11b, which contains the thermal component 23, such distortion can be absorbed by an inner wall face of the first coolant path 11c facing the stator 21.

In other words, the bottom face portion of the first containing portion 11b on which the thermal component 23 is placed can be maintained in a flat state without being distorted, so that components contained in the first containing portion 11b, including the thermal component 23, can be stably operated without being adversely affected by distortion.

As described above, the rotating electrical machine according to the embodiment includes a cylindrical stator and a frame, which includes a first portion formed by reducing the diameter at a part of the outer peripheral surface such that the thickness of the frame at the part is reduced and second portions that have a larger thickness than the first portion, the stator being provided to an inner peripheral surface of the frame. The frame includes a containing portion, a first coolant path, and second coolant paths. The containing portion contains a thermal component. The first coolant path is formed between the containing portion and the stator. The second coolant paths are formed in the second portions.

The rotating electrical machine according to the embodiment is thus capable of having a reduced size.

Although the case where the thermal component is disposed above the stator is described in the embodiment, the position at which the thermal component is disposed is not limited to this.

The case where the side walls of the frame located on the sides of the stator are thinned is described as an example in the above embodiment, but the embodiment is not limited to this. Specifically, the part to be thinned and the shape into which the part is to be thinned should appropriately be determined in accordance with the shape of the space at which the rotating electrical machine itself is disposed, the position at which the thermal component is disposed, and other factors.

In the above embodiment, the case where the rotating electrical machine is mainly used as a vehicle generator is described. It goes without saying, however, that the embodiment can be applied to any rotating electrical machine irrespective of the application purpose of the machine. For example, the embodiment may be applied to a case where the rotating electrical machine is used as an electric motor.

Other effects and modifications can be easily derived by those skilled in the art. Therefore, broader aspects of the present disclosure are not limited to the specific details and the exemplary embodiment disclosed and described above. Accordingly, the present disclosure can be variously modified without departing from the spirit or the scope of the general concept of the present disclosure defined by the scope of the appended claims and the equivalents thereof.

It should be understood by those skilled in the art that various modifications, combinations, subcombinations and alternations may occur depending on design requirements and other factors insofar as they are within the scope of the appended claims or the equivalents thereof.

## Claims

1. A rotating electrical machine (10) **characterized by** comprising:
a cylindrical stator (21); and
a frame (11) including a first portion (11a) and a second portion (11h), the first portion (11a) being formed by reducing the diameter of the frame (11) at a part of an outer peripheral surface such that the thickness of the frame at the part is reduced, the second portion (11h) having a larger thickness than the first portion (11a), the stator (21) being provided to an inner peripheral surface of the frame (11),
wherein the frame (11) includes
a containing portion (11b) that contains a thermal component (23),
a first coolant path (11c) that is formed between the containing portion (11b) and the stator (21), and
a second coolant path (11d) that is formed in the second portion (11h).

2. The rotating electrical machine (10) according to Claim 1, **characterized in that** the first coolant path (11c) is formed so as to be continuous with an inlet (15) of a coolant,
the second coolant path is provided in a plurality,
one of the second coolant paths (11d) is formed so as to be continuous with an outlet (16) of the coolant, and
the second coolant paths (11d) are connected to one another in a predetermined order so as to be continuous with the first coolant path (11c).

3. The rotating electrical machine (10) according to Claim 1 or 2, **characterized in that** the second coolant path is provided in a plurality, and
the frame (11) includes a connection path (11e), which connects the second coolant paths (11d) to each other, near an inner peripheral end face of the frame in a center axis direction.

4. The rotating electrical machine (10) according to Claim 1, 2, or 3, **characterized in that** the second coolant path (11d) has an inner wall face having a shape that corresponds to an outer periphery of the stator (21).

5. The rotating electrical machine (10) according to any one of Claims 1 to 4, **characterized in that** the first portion is provided in a plurality, and the second coolant path is provided in a plurality, and
the frame (11) includes the first portions (11a), which are disposed on both sides of the stator (21), and the second coolant paths (11d), which are individually disposed above and below the first portions (11a).

6. The rotating electrical machine (10) according to any one of Claims 1 to 5, **characterized in that** the first coolant path (11c) has a ceiling portion, which is an inner wall face having a shape that is parallel to a bottom face of the containing portion (11b).

7. The rotating electrical machine (10) according to Claim 6, **characterized in that** the first coolant path (11c) includes a protrusion (11cb) on the ceiling portion and a protrusion (11cb) on a bottom face portion that is opposite the ceiling portion, the protrusions (11cb) protruding toward each other.

8. The rotating electrical machine (10) according to Claim 6, **characterized in that** the first coolant path (11c) includes a strut (11cb') that connects the ceiling portion and a bottom face portion that is opposite the ceiling portion.
